# EUROPEAN PATENT APPLICATION

(11) **EP 4 734 455 A1**
(43) Date of publication of application: **29.04.2026**
(21) Application number: 24208192.5
(22) Date of filing: 22.10.2024
(51) Int. Cl.: H04L 12/40

(54) **METHODS, COMPONENTS, COMPUTER PROGRAMS AND MATERIAL HANDLING VEHICLES FOR AUTOMATIC BAUD RATE CONFIGURATION OF A CONTROLLER AREA NETWORK NODE**

(71) Applicant: Toyota Material Handling Manufacturing Sweden AB, 595 81 Mjölby (SE)
(72) Inventor: STRAND, Michael, 590 47 Vikingstad (SE); NÅBO, Daniel, 583 34 Linköping (SE)
(74) Representative: Zacco Sweden AB

(57) **Abstract**

The present disclosure relates to a method (100) for automatic baud rate configuration of a controller area network, CAN, node. The CAN node is arranged to store a first baud rate. The CAN node has stored a second baud rate. The method comprises determining (S200) if the CAN node has a stored first baud rate, if there is a stored first baud rate at the CAN node, participating (S300) on the CAN bus using the stored first baud rate, and, if there is no stored first baud rate at the CAN node, executing (S400) a baud rate update sequence. The present disclosure relates to corresponding components and material handling vehicles.

## Description

### TECHNICAL FIELD

The present disclosure relates to automatic baud rate determination, particularly in the context of material handling vehicles.

### BACKGROUND ART

Material handling vehicles, MHVs, often use one or more CAN buses and different baud rates. All nodes on each CAN-bus must use the same baud rate in order to work. Some nodes are "generic", i.e. used in different machines and thus with different baud rates, for example a general I/O extender, a steering servo, a user interface etc.

Since configuring or changing the baud rate over the CAN-bus is not feasible once the node is mounted into a machine, a common way to handle this is to let different baud rate configurations of said node have a separate part number and thus treated as different hardware, even if the actual hardware is identical.

### SUMMARY OF THE INVENTION

Creating and maintaining more than one part number of any given hardware add unnecessary cost in many areas, such as administration, warehouse space, logistics etc. There is also always the risk of using wrong part number, in this case wrong baud rate, and thus have to deal with technical fault finding.

The present disclosure relates to a method for automatic baud rate configuration of a controller area network, CAN, node. The CAN node is arranged to store a first baud rate. The CAN node has stored a second baud rate. The method comprises determining if the CAN node has a stored first baud rate. The method also comprises participating on the CAN bus using the stored first baud rate if there is a stored first baud rate at the CAN node. The method additionally comprises executing a baud rate update sequence if there is no stored first baud rate at the CAN node. The baud rate update sequence comprises participating on the CAN bus using the second baud rate. The baud rate update sequence further comprises determining a baud rate of the CAN bus based on a message activity over the connection between the CAN node and the CAN bus. The baud rate update also sequence comprises storing the determined baud rate of the CAN bus as a first baud rate at the CAN node.

The disclosed method thereby enables automatic installation of components having a CAN node that are supposed to participate on a CAN bus, such as a component for controlling an operational aspect of a material handling vehicle, MHV, via a CAN bus of the MHV. The method further facilitates transfer of and/or replacement of such components without any manual testing for correct baud rates.

According to some aspects, participating on the CAN bus using the stored first baud rate further comprises clearing the stored first baud rate of the CAN node based on a detected mismatch between the baud rate of the CAN node and the baud rate of the CAN bus.

This is an optional state in which a possible fault of CAN baud rate is detected, which could be the case in an example of re-using spare parts between different machines. In this optional state, the baud rate configuration could be automatically erased/cleared and the process of determining the baud rate can start over automatically.

According to some aspects, determining the baud rate of the CAN bus comprises determining if the CAN bus is active. Determining the baud rate of the CAN bus further comprises, based on the CAN bus being active, determining a baud rate of the CAN bus based on a first message from the CAN bus. Determining the baud rate of the CAN bus also comprises, based on the CAN bus not being active, determining a baud rate of the CAN bus based on a response triggered by a frame transmitted by the CAN node, the CAN node being configured to participate on the CAN bus at a baud rate selected from a set of predetermined baud rates.

The method thereby automatically determines the baud rate by either listening to an active CAN bus or trigger a response if the CAN bus is silent.

According to some aspects, the method further comprises triggering the CAN node to automatically execute the method upon powering up.

According to some aspects, the method further comprises receiving at least one identifier from the CAN bus, and accepting each received identifier.

According to some aspects, the CAN node is a CAN node of a component for controlling an operational aspect of a material handling vehicle, MHV, via a CAN bus of the MHV.

According to some aspects, the CAN bus is a CAN bus of a material handling vehicle, MHV. According to some aspects, the material handling vehicle is an electric powered material handling vehicle. According to some aspects, the MHV comprises a cargo holder arranged to be raised and lowered.

One of the major use-cases for the disclosed method is automatic installation and replacement of components of material handling vehicles that requires a CAN node of the component to automatically connect to the CAN bus at the same baud rate as the CAN bus.

The present disclosure further relates to a component for controlling an operational aspect of a material handling vehicle, MHV, via a CAN bus of the MHV. The component comprises a CAN node arranged to participate on the CAN bus of the MHV when connected to the CAN bus. The component further comprises control circuitry arranged to carry out the method for automatic baud rate configuration of a controller area network, CAN, node as described above and below.

The component can thereby be installed in an MHV automatically by simply connecting the CAN node of the component to the CAN bus of the MHV. The component can also be easily transferred from one MHV to another, since the component can reconfigure itself to use the baud rate of the new MHV.

The present disclosure also relates to a material handling vehicle, MHV. The material handling vehicle comprises a CAN bus and at least one a component for controlling an operational aspect of a material handling vehicle, MHV, via a CAN bus of the MHV as described above and below, the least one a component being connected to the CAN bus. According to some aspects, the MHV is an electric powered material handling vehicle. According to some aspects, the MHV comprises a cargo holder arranged to be raised and lowered.

The material handling vehicle can thereby have any of the at least one a component for controlling an operational aspect of an MHV be replaced or transferred to another MHV without the need for an operator to know the correct baud rate in advance or manually test different baud rates.

The present disclosure further relates to a computer program product comprising a non-transitory computer-readable storage medium having stored thereon a computer program comprising program instructions. The computer program is loadable into a processor and configured to cause the processor to perform the method for automatic baud rate configuration of a controller area network, CAN, node as described above and below.

The present disclosure also to a computer program comprising program instructions which, when executed by a processor of CAN node according to the present disclosure, causes the CAN node to perform the method for automatic baud rate configuration of a controller area network, CAN, node as described above and below

### BRIEF DESCRIPTION OF THE DRAWINGS

Figure 1a illustrates the method for automatic baud rate configuration of a controller area network, CAN, node;
Figure 1b illustrates a flowchart of the method for automatic baud rate configuration of a CAN node;
Figure 2 illustrates a component for controlling an operational aspect of a material handling vehicle, MHV, via a CAN bus of the MHV; and
Figure 3 illustrates a material handling vehicle according to the present disclosure.

### DETAILED DESCRIPTION

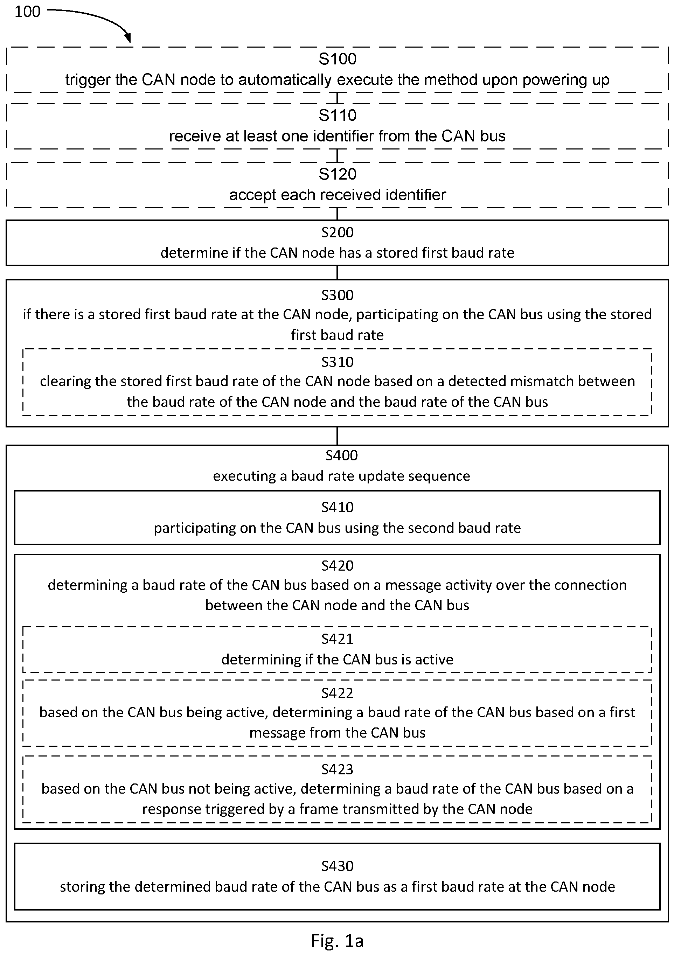

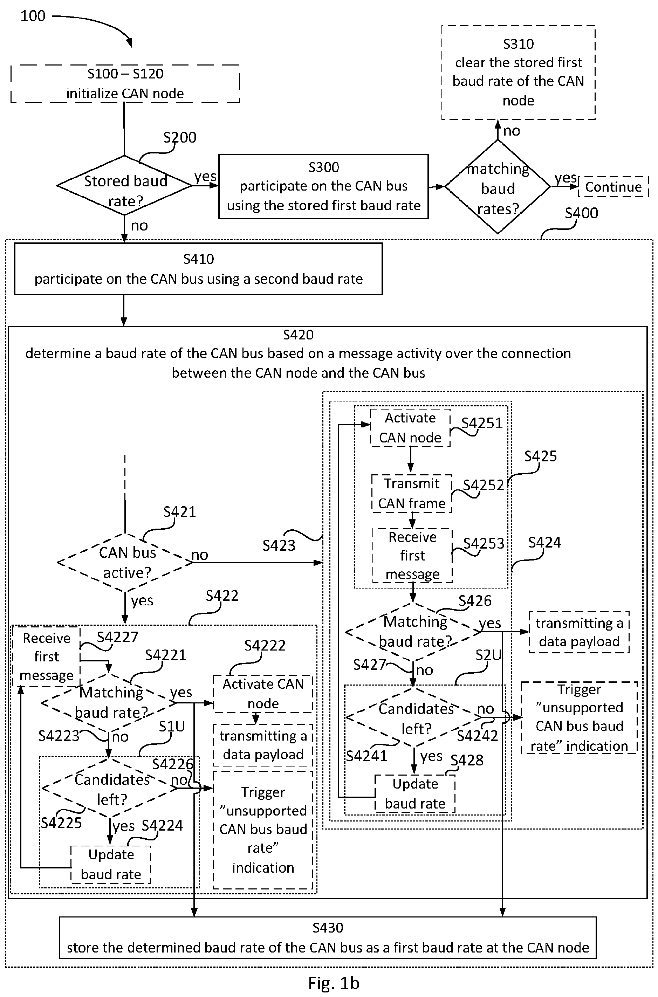

Figures 1a and 1b illustrates a method 100 for automatic baud rate configuration of a controller area network, CAN, node.

One of the main objectives of the present disclosure is to provide solutions that facilitate installation of new or used components in material handling vehicles, MHVs. According to some aspects, the CAN node is a CAN node of a component for controlling an operational aspect of a material handling vehicle, MHV, via a CAN bus of the MHV. According to some aspects, the CAN bus is a CAN bus of a material handling vehicle, MHV. According to some aspects, the material handling vehicle is an electric powered material handling vehicle. According to some aspects, the MHV comprises a cargo holder arranged to be raised and lowered.

One of the main ideas behind the disclosed method is to automatically identify the baud rate of a CAN bus to which the CAN node is connected for the first time. The baud rate of the CAN bus is then stored at the CAN node as a first baud rate. The method can then look for the presence of a first baud rate and, if found, conclude that the automatic detection has been performed previously and can skip the automatic detection procedure and proceed with the operational use. This will allow automatic installation of the CAN node with respect to a CAN bus.

If it is later determined that a stored first baud rate does not match the baud rate of the CAN bus to which the CAN node is connected, which may be the case if the CAN node has been transferred from one CAN bus to another, the first baud rate CAN be erased and a search for the correct CAN bus baud rate can be performed automatically, as will be illustrated in greater detail below. This allows components comprising the CAN node to be transferred from one CAN bus to another, such as in the use cases of material handling vehicles as described above and below, and the CAN node automatically updates the baud rate to the new CAN bus baud rate.

Thus, the CAN node is arranged to store a first baud rate. According to some aspects, the first baud rate is only set once. According to some aspects, the first baud rate can be reset. In other words, according to some aspects, the CAN node is further arranged to store an updated first baud rate replacing a first baud rate currently stored at the CAN node.

The CAN node has stored a second baud rate. The second baud rate will serve as a default baud rate if there is no first baud rate currently stored at the CAN node, as described further below. The second baud rate can thereby be used as a starting point when searching for a baud rate matching the baud rate of the CAN bus.

The CAN node comprises control circuitry, wherein the control circuitry comprises a microcontroller and a CAN controller. The microcontroller is communicatively connected to the CAN controller. According to some aspects, the CAN controller is integrated with the microcontroller. The CAN node further comprises a CAN transceiver communicatively connected to the CAN controller and configured to connect to a CAN bus. According to some preferred aspects, the control circuitry of the CAN node is configured to execute the disclosed method.

In some examples, the CAN node does not comprise a power source of its own, but rather relies on power provided by a connector, the connector being configured to facilitate connection of the CAN node to the CAN bus, when the CAN node is connected to the CAN bus via the connector.

Thus, according to some aspects, the CAN node is configured to be powered via a connector configured to facilitate connection of the CAN node to the CAN bus. The CAN node can thereby be triggered to automatically execute the disclosed method when powering up. Thus, according to some aspects, the method comprises triggering S100 the CAN node to automatically execute the disclosed method upon powering up.

The method 100 comprises determining S200 if the CAN node has a stored first baud rate. As described above, the method thereby looks if the CAN node has already been configured to participate on a CAN bus, and if so, can assume that the stored first baud rate matches the current baud rate of the CAN bus.

Thus, the method also comprises, if there is a stored first baud rate at the CAN node, participating S300 on the CAN bus using the stored first baud rate.

If there is a stored first baud rate that does not match the baud rate of the CAN bus, the first baud rate can be preferably cleared to allow for the disclosed method to start over with automatic baud rate detection. Thus, according to some aspects, participating S300 on the CAN bus using the stored first baud rate further comprises clearing S310 the stored first baud rate of the CAN node based on a detected mismatch between the baud rate of the CAN node and the baud rate of the CAN bus. According to some aspects, clearing S310 the stored first baud rate further comprises repeating the method 100 from determining S200 if the CAN node has stored a first baud rate.

Prior to participating on the CAN bus, the CAN node can be set up to handle identifiers from the CAN bus. According to some aspects, the method comprises receiving S110 a set of identifiers from the CAN bus. According to some aspects, the method comprises accepting S120 each received identifier.

The method further comprises, if there is no stored first baud rate at the CAN node, executing S400 a baud rate update sequence.

The baud rate update sequence comprises participating S410 on the CAN bus using the second baud rate.

As described above, the second baud rate is used as a default baud rate when participating S410 on the CAN bus using the second baud rate. Specifically, according to some preferred aspects, the second baud rate is a baud rate selected from a set of predetermined baud rates. According to some aspects, the set of predetermined baud rates comprises a plurality of baud rates. According to some aspects, the set of predetermined baud rates is set to a set of multiples of standard baud rates.

By setting the set of predetermined baud rates to a set of multiples of standard baud rates, the CAN node and/or a device comprising the CAN node can interface with multiple CAN busses operating at different baud rates, e.g. respective CAN busses of different material handling vehicles, MHVs. Setting the set of predetermined baud rates to a set of multiples of standard baud rates, the method becomes future-proof in that it is configured to handle baud rate upgrades matching multiples of standard baud rates. Thus, according to some aspects, the set of predetermined baud rates comprises a set of multiples of 125 kilobits per second, Kbps, preferably at least 125 Kbps, 250 Kbps, 500 Kbps, and 1000 Kbps.

In some examples, the set of predetermined baud rates comprises baud rates of a CAN baud rate standard. In some further examples, the set of predetermined baud rates comprises baud rates from at least one of the CAN baud rate standards 'CAN CC', 'CAN FD', 'CAN XL'. The CAN baud rate standard 'CAN CC', which is to be interpreted as `Controller Area Network Classic' comprises baud rates in multiples of 125 Kbps, such as 125 Kbps, 250 Kbps, 500 Kbps and 1000 Kbps. 800 Kbps may also be used as a baud rate of 'CAN CC'. Thus, in some examples the set of predetermined baud rates comprises at least one baud rate in the range of 125 Kbs to 1000 Kbps. The 'CAN FD' baud rate standard comprises two sets of baud rates; a first set of baud rates selected from the 'CAN CC' baud rate standard and a second set of baud rates comprising at least one of 1000 Kbps, 1538 Kbps, 2000 Kbps, 4000 Kbps, 5000 Kbps, 6667 Kbps. 8000 Kbps and 10000 Kbps. Thus, in some examples the set of predetermined baud rates comprises at least one baud rate in the range of 125 Kbps to 10000 Kbps. The 'CAN XL' baud rate standard comprises baud rates up to 20 megabit per second, Mbps. Thus, in some examples the set of predetermined baud rates comprises at least one baud rate in the range of 125 Kbps to 20 Mbps. The listed baud rates are given as non-limiting examples and in principle any baud rate can be used, even though they are not necessarily part of a CAN baud rate standard. The listed ranges of potential baud rates can be implemented together with multiples of predetermined baud rates. For instance, in some examples the set of predetermined baud rates comprises at least on baud rate in the range of 125 Kbps to 20 Mbps, with each baud rate being a multiple of 125 Kbps. In order to potentially reduce the time it takes to go through and test the baud rates of a large set of predetermined baud rates, the set of predetermined baud rates can be arranged in an order that determines which baud rate is tested next if the current baud rate does not match the baud rate of the CAN bus, wherein the order is arranged to reduce a search time for the correct baud rate of the CAN bus. Specifically, in some examples, the set of predetermined baud rates are arranged in an order based on most common or most likely CAN bus baud rates for a predetermined scenario.

Since the first baud rate is intended to be used if present, the first baud rate can be set to the second baud rate. Thus, according to some aspects, participating S410 on the CAN bus using the second baud rate comprises setting the first baud rate to the second baud rate and then participate on the CAN bus using the first baud rate.

For illustrative purposes, the first baud rate is assumed to be the current baud rate of the CAN node and will be used to illustrate determining S420 of a baud rate of the CAN bus based on a message activity over the connection between the CAN node and the CAN bus, below.

The baud rate update sequence further comprises determining S420 a baud rate of the CAN bus based on a message activity over the connection between the CAN node and the CAN bus.

In practice, determining S420 a baud rate of the CAN bus based on a message activity over the connection between the CAN node and the CAN bus can be performed in two processes. In a first process, the CAN node is set to a silent, listen-only mode and waits for messages across the CAN bus. If the CAN bus is active, meaning that there are messages that the CAN node can receive, the CAN node can determine the baud rate by listening to received messages at different baud rates of the CAN node until a matching baud rate has been found. A second process is used when the CAN bus is inactive, meaning that the CAN node does not receive any messages when in listen-only mode. The CAN node can then switch to an active mode and transmit test messages configured to trigger responses from the CAN bus and determine the baud rate of the CAN bus based on the responses. Details of examples of how this can be implemented are illustrated further below.

Thus, according to some aspects, the method further comprises determining S421 if the CAN bus is active.

As stated above, the method preferably starts listening for messages transmitted over the CAN bus to see if it is active before attempting active attempts at getting messages from the CAN bus. If no messages are received from the CAN bus within a predetermined time period, the CAN bus can be deemed not active.

According to some aspects, the method 100 further comprises configuring the CAN node to only receive messages from the CAN bus, and configuring the CAN node to wait for a message from the CAN bus within a predetermined time period.

According to some aspects, determining S420 the baud rate of the CAN bus further comprises, based on the CAN bus being active, determining S422 a baud rate of the CAN bus based on a first message from the CAN bus.

The first message comprises either an acknowledgement, ACK, if the baud rate matches the baud rate of the CAN bus, or a bus-error message if the baud rate does not match the baud rate of the CAN bus.

If the first message indicates that the baud rate matches the baud rate of the CAN bus, the CAN node needs to be configured to be able to transmit messages if it is set to a "Listen-Only" mode. Thus, according to some aspects, determining S422 a baud rate of the CAN bus based on the first message from the CAN bus further comprises determining S4221 if the first baud rate matches the baud rate of the CAN bus based on the first message, and based on the first baud rate matching the baud rate of the CAN bus, configuring S4222 the CAN node to participate on the CAN bus.

If the first baud rate doesn't match the baud rate of the CAN bus, the method successively goes through and attempts baud rates from the set of predetermined set of baud rates. Either one of the remaining baud rates left to try will match the baud rate of the CAN bus and the CAN node is configured S4222 to participate on the CAN bus, as above, or there will be no match, which preferably triggers an indication that none of the baud rates of the set of predetermined baud rates is the same as that of the CAN bus baud rate.

Thus, according to some aspects, determining S422 a baud rate of the CAN bus based on the first message from the CAN bus comprises, based on the first baud rate not matching the baud rate of the CAN bus, triggering S4223 a first baud rate update sequence, S1U, the first baud rate update sequence being configured to, based on there being at least one baud rate left to try, setting S4224 the first baud rate to one of the baud rates left to try. According to some aspects, the first baud rate update sequence, S1U, is further configured to determine S4225 if there are any baud rates left to try from the set of predetermined baud rates. According to some aspects, the S1U is also configured to, based on there being no baud rates left to try, triggering S4226 an indication configured to indicate that the baud rate of the CAN bus does not match any of the baud rates in the set of predetermined baud rates. According to some aspects, the S1U is also configured to, based on there being baud rates left to try, receiving S4227 a new first message from the CAN bus.

According to some aspects, the method also comprises, based on the CAN bus not being active, determining S423 a baud rate of the CAN bus based on a response triggered by a frame transmitted by the CAN node, the CAN node being configured to participate on the CAN bus at a baud rate selected from a set of predetermined baud rates.

Just as in the case of the CAN node passively listening on the CAN bus at the different predetermined baud rates, the active participation of the CAN node proceed analogously by testing each of the predetermined baud rates until a match is found or there are no more baud rates left to try to match with the baud rate of the CAN bus.

Thus, according to some aspects, determining S423 the baud rate of the CAN bus based on the set of responses comprises repeating S424 a second baud rate detection sequence until a second criterion is met, the second criterion comprising the first baud rate matching the baud rate of the CAN bus or no baud rate from the set of predetermined baud rates matching the baud rate of the CAN bus. The second baud rate detection sequence comprises triggering S425 transmission of the first message and determining S426 if the first baud rate matches the baud rate of the CAN bus based on the transmitted first message. The second baud rate detection sequence further comprises, based on the first baud rate not matching the baud rate of the CAN bus, triggering S427 a second baud rate update sequence S2U, the second baud rate update sequence being configured to, based on there being at least one baud rate left to try, setting S428 the first baud rate to one of the predetermined baud rates left to try.

According to some aspects, triggering S425 transmission of the first message further comprises configuring S4251 the CAN node to participate on the CAN bus, transmitting S4252, from the CAN node to the CAN bus, a CAN frame at the first baud rate, and receiving S4253, at the CAN node, the first message.

The second baud rate update sequence S2U presents a potential problem in that simply transmitting messages from the CAN node to the CAN bus can result in the CAN bus being overloaded. If the CAN node can transmit messages, i.e. it is not in "Listen-Only" mode, and the first baud rate differs from the CAN bus baud rate, the CAN node will receive a bus error message for each transmitted message. The CAN node will then transmit an Error Flag, which interferes with the traffic on the CAN bus, because other nodes on the CAN bus will detect the Error Flag and discard the current message and increase their error counters. There is a risk that message from the CAN node, instead of receiving an ACK, results in an error frame that causes the incorrect transmission from the CAN node to go on indefinitely, waiting for an ACK that never appears, resulting in the CAN bus being overloaded. In order to prevent this, the CAN node looks for error flags of the first message and deactivates the CAN node as soon as an error flag is detected, as well as aborting any pending CAN frames.

Thus, according to some aspects, the second baud rate update sequence, S2U, is further configured to determining S4241 if there are any baud rates left to try from the set of predetermined baud rates, aborting any pending CAN frames, disabling the CAN controller of the CAN node, and, based on there being no baud rates left to try, triggering S4242 an indication configured to indicate that the baud rate of the CAN bus does not match any of the baud rates in the set of predetermined baud rates.

The baud rate update sequence also comprises storing S430 the determined S420 baud rate of the CAN bus as a first baud rate at the CAN node.

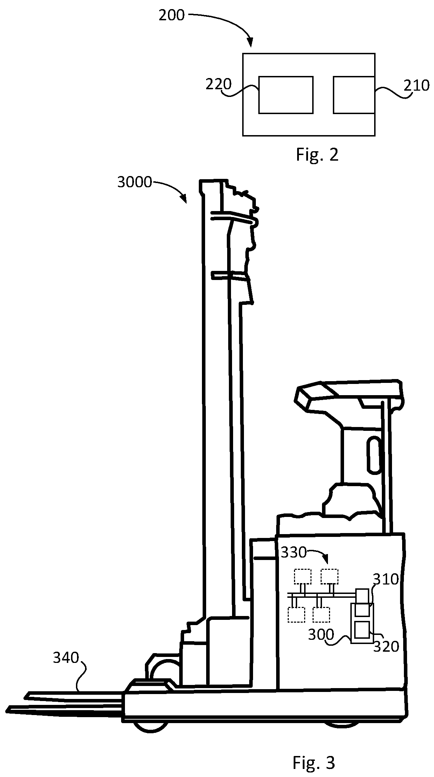

Figure 2 illustrates a component 200 for controlling an operational aspect of a material handling vehicle, MHV, via a CAN bus of the MHV. The component comprises a CAN node 210 arranged to participate on the CAN bus of the MHV when connected to the CAN bus. The CAN node further comprises control circuitry 220 arranged to carry out the disclosed method for automatic baud rate configuration of a controller area network, CAN, node, as described above and below. According to some aspects, the CAN bus is a CAN bus of a material handling vehicle, MHV. According to some aspects, the material handling vehicle is an electric powered material handling vehicle. According to some aspects, the MHV comprises a cargo holder arranged to be raised and lowered. The component thereby provides automatic installation when connected to the CAN bus of the MHV for the first time, as well as providing automatic baud rate determination and baud rate update for the CAN node if transferred to a new MHV.

Figure 3 illustrates a material handling vehicle, MHV, 3000 comprising a CAN bus 330 and at least one component 300 for controlling an operational aspect of the material handling vehicle, MHV, via the CAN bus of the MHV. The at least one component 300 is connected to the CAN bus 330. According to some aspects, the MHV is an electric powered material handling vehicle. According to some aspects, the MHV comprises a cargo holder 340 arranged to be raised and lowered. According to some further aspects, at least one of the at least one component is configured to control an operational aspect of the cargo holder, such as raising and/or lowering the cargo holder.

The present disclosure relates to a computer program product comprising a non-transitory computer-readable storage medium having stored thereon a computer program comprising program instructions. The computer program is loadable into a processor and configured to cause the processor to perform the method for automatic baud rate configuration of a controller area network, CAN, node as described above and below.

The present disclosure also to a computer program comprising program instructions which, when executed by a processor of CAN node according to the present disclosure, causes the CAN node to perform the method for automatic baud rate configuration of a controller area network, CAN, node as described above and below.

## Claims

1. A method (100) for automatic baud rate configuration of a controller area network, CAN, node, the CAN node being arranged to store a first baud rate, the CAN node having stored a second baud rate, the method comprising
- determining (S200) if the CAN node has a stored first baud rate,
- if there is a stored first baud rate at the CAN node, participating (S300) on the CAN bus using the stored first baud rate,
- if there is no stored first baud rate at the CAN node, executing (S400) a baud rate update sequence, the baud rate update sequence comprising
• participating (S410) on the CAN bus using the second baud rate,
• determining (S420) a baud rate of the CAN bus based on a message activity over the connection between the CAN node and the CAN bus, and
• storing (S430) the determined (S420) baud rate of the CAN bus as a first baud rate at the CAN node.

2. The method according to claim 1, wherein participating (S300) on the CAN bus using the stored first baud rate further comprises
- clearing (S310) the stored first baud rate of the CAN node based on a detected mismatch between the baud rate of the CAN node and the baud rate of the CAN bus.

3. The method according to claim 1 or 2, wherein determining (S420) the baud rate of the CAN bus comprises
- determining (S421) if the CAN bus is active,
- based on the CAN bus being active, determining (S422) a baud rate of the CAN bus based on a first message from the CAN bus, and
- based on the CAN bus not being active, determining (S423) a baud rate of the CAN bus based on a response triggered by a frame transmitted by the CAN node, the CAN node being configured to participate on the CAN bus at a baud rate selected from a set of predetermined baud rates.

4. The method according to any of the preceding claims, wherein the method further comprises
- triggering (S100) the CAN node to automatically execute the method upon powering up.

5. The method according to according to any of the preceding claims, wherein the method further comprises
- receiving (S110) at least one identifier from the CAN bus, and
- accepting (S120) each received identifier.

6. The method according to claim any of the preceding claims, wherein the CAN node is a CAN node of a component for controlling an operational aspect of a material handling vehicle, MHV, via a CAN bus of the MHV.

7. The method according to any of the preceding claims, wherein the CAN bus is a CAN bus of a material handling vehicle, MHV.

8. The method according to claim 7, wherein the material handling vehicle is an electric powered material handling vehicle.

9. The method according to claim 7 or 8, wherein the MHV comprises a cargo holder arranged to be raised and lowered.

10. A component (200, 300) for controlling an operational aspect of a material handling vehicle, MHV, via a CAN bus of the MHV, the component comprising
- a CAN node (210, 310) arranged to participate on the CAN bus of the MHV when connected to the CAN bus,
- control circuitry arranged (220, 320) to carry out the method (100) according any of claims 1-9.

11. A material handling vehicle, MHV, (3000) comprising
- a CAN bus (330), and
- at least one component (300) according to claim 10 connected to the CAN bus (330).

12. The material handling vehicle (3000) according to claim 11, wherein the MHV is an electric powered material handling vehicle.

13. The MHV (3000) according to claim 11 or 12, wherein the MHV comprises a cargo holder (340) arranged to be raised and lowered.

14. A computer program product comprising a non-transitory computer-readable storage medium having stored thereon a computer program comprising program instructions, the computer program being loadable into a processor and configured to cause the processor to perform the method (100) for automatic baud rate configuration of a controller area network, CAN, node according to any of claims 1-9.

15. A computer program comprising program instructions which, when executed by a processor of CAN node according to the present disclosure, causes the CAN node to perform the method for automatic baud rate configuration of a controller area network, CAN, node according to any of claims 1-9.
